Europäisches Patentamt

European Patent Office

Office européen des brevets

(11) Publication number: **0 306 310**
**A1**

## (12) EUROPEAN PATENT APPLICATION

(21) Application number: **88308105.1**

(22) Date of filing: **01.09.88**

(51) Int. Cl.⁴: **C 08 J 7/16**
H 01 M 2/16, B 32 B 27/30,
B 32 B 27/32, B 32 B 23/08

(30) Priority: **04.09.87 JP 221455/87**
**04.09.87 JP 221456/87**
**04.09.87 JP 221457/87**
**12.11.87 JP 286231/87**

(43) Date of publication of application:
**08.03.89 Bulletin 89/10**

(84) Designated Contracting States:
**AT BE CH DE ES FR GB GR IT LI LU NL SE**

(71) Applicant: **MITSUI PETROCHEMICAL INDUSTRIES, LTD.**
**2-5, Kasumigaseki 3-chome Chiyoda-ku**
**Tokyo 100 (JP)**

(72) Inventor: **Senoo, Toshikazu**
**1 Yusyudai-higashi 1-chome**
**Ichihara-shi Chiba (JP)**

**Yamanaka, Toru**
**5 Yusyudai-nishi 2-chome**
**Ichihara-shi Chiba (JP)**

**Yoshimura, Tadatoshi**
**28-6 Tamagawa 2-chome**
**Setagaya-ku Tokyo (JP)**

**Yasutake, Tatsuo**
**3-23 Shinmachi 3-chome**
**Ootake-shi Hiroshima (JP)**

**Tokita, Suguru**
**4-9 Waki 2-chome**
**Wakicho Kugagun Yamaguchi (JP)**

(74) Representative: **Myerscough, Philip Boyd et al**
**J.A.Kemp & Co. 14, South Square Gray's Inn**
**London, WC1R 5EU (GB)**

(54) Process for preparing battery separators.

(57) In the processes for preparing a battery separator, an ethylene/(meth)acrylic acid copolymer film having a thickness variation falling within the range of ± 8 % based on an average film thickness thereof, is used as a substrate and (meth)acrylic acid is graft polymerized on this ethylene/(meth)acrylic acid copolymer film to obtain a graft film. If necessary, the graft film obtained is treated with an aqueous solution of alkali hydroxide having specific concentration, followed by treating with water or a mixed solution of water and a water-soluble organic solvent. The battery separator thus obtained may be used after laminating with cellophane.

EP 0 306 310 A1

**Description**

# PROCESS FOR PREPARING BATTERY SEPARATORS

## FIELD OF THE INVENTION

This invention relates to processes for preparing battery separators and more particularly to the process for preparing battery separators which are not only uniform in resistivity but also excellent in dimentional stability and also in ability to inhibit permeation therethrough in the battery of an anode active substance such as silver ions.

## BACKGROUND OF THE INVENTION

In general, battery separators, particularly separators for alkaline battery, are required to be low and uniform in resistivity and also excellent in ability to inhibit permeation therethrough of anode active substances.

It is well known that graft films obtained by graft polymerization of polyethylene films with acrylic acid are used as battery separators. Furthermore, Japanese Patent L-O-P Publn. No.96328/1977 proposes battery separators composed of films of ethylene/acrylic acid copolymers.

Japanese Patent L-O-P Publn. No.121267/1980 further discloses processes for preparing battery separators, characterized by graft polymerization of films of copolymers of ethylene and (meth)acrylic acid or alkyl esters thereof or metal salts thereof with at least one monomer selected from among (meth)acrylic acid, alkyl esters thereof or metal salts thereof.

Admitting that as alleged in the aforesaid Patent L-O-P Publn. No.121267/1980, the battery separators obtained by graft polymerization of films of copolymers of ethylene and (meth)acrylic acid with (meth)acrylic acid are latently excellent, the present inventors conducted a test for putting the disclosed battery separators to practical use, whereupon they have found that there still remain problems awaiting solution.

That is, a first problem to be solved is that in the disclosed battery separators, the measured value of resistivity is not uniform and the value widely varies from part to part of the film of separator, and in case that the disclosed battery separator is installed in the alkaline battery, the output voltage of said alkaline battery will vary.

Further, a second problem to be solved is that the disclosed battery separators swell on contact with an alkali hydroxide electrolytic solution in the battery and are subject to dimentional change. If such dimentional change occurs in the battery separators, assumable operation of the battery becomes difficult and, moreover, the lifetime of the battery shortens as leakage of liquid takes place in the battery while it is used.

With the view of solving the above-mentioned problems, the present inventors prosecuted extensive researches and eventually have accomplished the present invention on the basis of their findings as mentioned below.

That is, it has been found that when an ethylene/(meth)acrylic acid copolymer film having a thickness variation falling within the range of ± 8 % based on an average thickness of the film used as a film substrate is graft polymerized with (meth)acrylic acid, a concentration of the grafted (meth)acrylic acid averages throughout the whole area of the film substrate and the grafted state inside the film becomes homogeneous, whereby a battery separator having a uniform value of film resistivity is obtained.

Further, it has been found that for the purpose of improving dimentional stability of a battery separator, if a graft film as a battery separator,which is obtained by graft polymerizing (meth)acrylic acid on an ethylene/(meth)acrylic acid copolymer film as a film substrate, has been previously treated with an electrolytic solution having practically the same concentration as in the electrolytic solution of the battery to be installed with said graft film so that the state inside the battery separator film is the same as that of said graft film subjected to treatment with the electrolytic solution as aforesaid, it becomes possible to effectively control dimentional change of the separator due to swelling thereof when said separator is installed in the battery.

## OBJECT OF THE INVENTION

An object of the present invention is to provide processes for preparing such battery separators as comprising as a film substrate an ethylene/(meth)acrylic acid copolymer film on which (meth)acrylic acid has been graft polymerized, said film having a uniform value of film resistivity, being excellent in dimentional stability and, moreover, having an excellent ability to inhibit permeation therethrough of anode active substances.

## SUMMARY OF THE INVENTION

The first process for preparing battery separators of the present invention is the process wherein an ethylene/(meth)acrylic acid copolymer film having a thickness variation falling within the range of ± 8 % based on average film thickness thereof is used as a substrate, and (meth)acrylic acid is graft polymerized on this ethylene/(meth)acrylic acid copolymer film.

The second process for preparing battery separators of the present invention is the process wherein an ethylene/(meth)acrylic acid copolymer film having a thickness variation falling within the range of preferably ± 8 % based on an average film thickness thereof is used as a substrate, (meth)acrylic acid is graft polymerized on this ethylene/(meth)acrylic acid copolymer film, and this graft film is then treated with an aqueous alkali hydroxide solution having a concentration of $\alpha \pm 5$ % by weight, wherein the $\alpha$ % by weight is taken as a concentration of the aqueous alkali hydroxide solution used as an electrolytic solution of the battery to be installed with this graft film used as a separator therefore.

The third process for preparing battery separators of the present invention is the process wherein an ethylene/(meth)acrylic acid copolymer film having a thickness variation falling within the range of preferably ± 8 % based on an average film thickness thereof is used as a substrate, (meth)acrylic acid is graft polymerized on this ethylene/(meth)acrylic acid copolymer film, and the resulting graft film is treated with an aqueous alkali hydroxide solution having a concentration of preferably $\alpha \pm 5$ % by weight, wherein the $\alpha$ % by weight is taken as a concentration of the aqueous alkali hydroxide solution used as an electrolytic solution of the battery to be installed with this graft film used as a separator therefore, followed by treating with a mixture of water and a water-soluble organic solvent.

The fourth process for preparing battery separators of the present invention is the process wherein an ethylene/(meth)acrylic acid copolymer film having a thickness variation falling within the range of ± 8 % based on an average film thickness thereof is used as a substrate, (meth)acrylic acid is graft polymerized on this ethylene/(meth)acrylic acid copolymer film, and the resulting graft film is laminated with cellophane.

In accordance with the present invention, there are obtained battery separators which have a uniform value of film resistivity and which are excellent in dimentional stability and also in ability to inhibit permeation therethrough of anode active substances.

## BRIEF DESCRIPTION OF THE DRAWINGS

Fig.1 shows a distribution of the carboxylic acid concentration in a cross section of the film of battery separator obtained in Example 1.

Fig.2 shows a distribution of the carboxylic acid concentrations in a cross section of the film of battery separator obtained in Comparative Example. In each of Figs. 1 and 2, the surface and back of the battery separator taken as 0 and 1, respectively, are plotted as abscissa, and the potassium ion intensity is plotted as ordinate.

Fig. 3 is a sectional view of a cell for silver permeation test used in the silver permeation test conducted in Example 5.

## DETAILED DESCRIPTION OF THE INVENTION

The process for preparing battery separators of the present invention are illustrated below in detail.

Ethylene/(meth)acrylic acid copolymer films having a thickness variation falling within the range of ± 8 % based on an average film thickness thereof are used as film substrates for battery separators when said battery separators are prepared in accordance with the present invention. The use of such film substrates as having a thickness variation exceeding the aforesaid range of ± 8 % are not desirable. This is because, when such film substrates are graft polymerized with (meth)acrylic acid, the degree of graft attainable comes to be irregular and no battery separators having a uniform value of film resistivity are obtained.

The ethylene/(meth)acrylic acid copolymer films used as substrate films for battery separators in the present invention desirably have an average film thickness of 10-100μm, preferably 20-40μm.

Such ethylene/(meth)acrylic acid copolymer films used as the film substrates may be graft polymerized with (meth)acrylic acid by first irradiating said copolymer films with electron beams of 1-30 Mrad and then immersing the thus irradiated copolymer films in a thoroughly deaerated aqueous solution containing 10 - 50 % by weight of acrylic acid at a temperature of 20 - 60 °C, preferably 35 - 55 °C for 5 - 60 minutes.

The degree of graft of (meth)acrylic acid on the ethylene/(meth)acrylic acid copolymer films as the films substrates is preferably 40-70%, by weight, and more preferably 45-60% by weight. In this connection, the degree of graft referred to above is defined by the following equation.

$$\text{Degree of graft} = \frac{\text{Film weight after graft} - \text{Film weight before graft}}{\text{Film weight before graft}} \times 100$$

In order to obtain ethylene/(meth)acrylic acid copolymer films having the aforesaid thickness variation of $\pm$ 8 %, it is desirably that ethylene/(meth)acrylic acid copolymers containing 3 - 12 % by weight of (meth)acrylic acid are used for preparing the desired ethylene/(meth)acrylic acid copolymer films. Because of their small melt index, such ethylene/(meth)acrylic acid copolymers may be formed into film substrates having a uniform film thickness.

In the present invention, it is desirable to treat the thus obtained graft film with an aqueous solution of alkali hydroxide. This treatment is carried out by immersing the (meth)acrylic acid-grafted film thus obtained in an aqueous solution of alkali hydroxide having a concentration of $\alpha \pm 5$ % by weight, wherein the $\alpha$ % by weight is taken as the concentration of the aqueous solution of alkali hydroxide used as an electrolytic solution of an alkaline battery to be installed with said (meth)acrylic acid-grafted film used as a separator therefor.

Aqueous alkali solution used for treating such graft film as mentioned above are preferably aqueous solutions containing 40 $\pm$ 5 % by weight of potassium hydroxide when a concentration of potassium hydroxide in an electrolytic solution of a battery to be installed with a separator is 40 % by weight. The treatment of the graft film with the aqueous alkali solution is preferably carried out at a temperature from room temperature up to 70 °C for 10 - 60 minutes.

The battery separator thus treated is then subjected to washing treatment with (i) water or (ii) a mixed liquid of water and a water-soluble organic solvent, followed by drying. In the present invention, it is particularly desirable that the battery separators as prepared are subjected to washing treatment with mixed solutions of water and water-soluble organic solvents.

Water-soluble organic solvents used in combination with water in this washing treatment include organic solvents of such series as alcohol, ketone and carboxylic acid. Of these organic solvents, preferred are those of alcohol series such as methanol, ethanol and ethylene glycol, and those of ketone series such as acetone. Such organic solvents may be used either singly or in admixture of two or more. Particularly preferred is a mixed solution of ethylene glycol, methanol and water.

The water-soluble organic solvents used in the present invention desirably have a solubility at 20 °C in water of at least 1 % by volume, preferably at least 10 % by volume and more preferably at least 20 % by volume. Particularly preferred organic solvents are those which are completely miscible with water.

In the mixed solvents of water and organic solvents used in the present invention, the mixing proportion of water to organic solvent is 5:95 to 95:5, preferably 20:80 to 80:20, and more preferably 30:70 to 70:30.

The temperature at which the graft film is washed with the above-mentioned mixed solution of water and water-soluble organic solvents is 5-70°C, preferably at least room temperature but less than 50°C. The washing time employed in that case is 1 - 60 minutes, preferably 2 - 5 minutes.

The washing of the graft film with the mixed solution of water and water-soluble organic solvent as mentioned above may be carried out, for example, by immersing said graft film in the mixed solution mentioned above.

When battery separators are prepared according to the present invention by using ethylene/(meth)acrylic acid copolymer films as film substrates for battery separators, and graft polymerizing (meth)acrylic acid on this ethylene/(meth)acrylic acid copolymer films, the separators for alkaline battery obtained thereby are uniform in film thickness and if they vary in the film thickness, the thickness variation observed is less than $\pm$ 2μm. In the present invention as illustrated above, moreover, the battery separators obtained are found to be quite uniform in film resistivity and even if the film resistivity varies, the resistivity variation is $\pm$ about 10m m$\Omega \bullet$ in$^2$, because the (meth)acrylic acid graft polymerized is present almost uniformly in the surface as well as inside of the graft film. On that account, it is possible to maintain the voltage of the battery installed with the battery separators thus obtained at a desired value.

Furthermore, in the present invention there can be obtained battery separators which are markedly excellent in dimentional stability by treating the battery separators as mentioned above with an aqueous solution of alkali hydroxide having a specific concentration as aforementioned and treating further with a mixed solution containing preferably water and water-soluble organic solvents. For instance, a dimentional change brought about in the battery separator obtained by the present invention after installing the battery therewith is very small as small as less than about 2 %, whereas a dimentional change in the battery separator obtained by the conventional process is markedly large as about 10 %.

In the present invention, it is also possible to use as a battery separator a laminate obtained by laminating cellophane with the battery separator (graft film) obtained in the manner now described. This cellophane preferably has a thickness variation falling within the range of $\pm$ 5 % based on an average film thickness thereof, and a thickness of this cellophane is 10 - 100μm, preferably about 20 - 50μm.

When the battery separator comprising the laminate of the graft film with cellophane is used in an alkaline battery, generally the amount of ions of anode active substance permeating through said separator is reduced to less than one-tenth of that passing through the separator comprising the graft film only.

Because the pores of cellophane laminated with the graft film do not permit ions of anode active substance having a large ion radius to permeate therethrough but permit alkali metal ions having a small ion radius to permeate therethrough, a short-lived service of a battery due to self-discharge may be inhibited when the battery is installed with the battery separator comprising the laminate of the graft film with cellophane.

The present invention is illustrated below with reference to examples, but it should be construed that the invention is in no way limited to those examples.

Example 1

Using an electron beams irradiation apparatus, an ethylene/methacrylic acid copolymer film containing 8.5 % by weight of methacrylic acid and having a film thickness of 30 ± 2μm was irradiated with electron beams of 10 Mrad in an atmosphere of nitrogen while cooling said copolymer film. Subsequently, the thus irradiated film was immersed for 10 minutes in an aqueous solution of 45 % by weight of acrylic acid kept at a temperature of 40 °C, said aqueous solution being thoroughly deaerated previously and incorporated with 0.25 % by weight of Mohr's salt, thereby graft polymerizing the acrylic acid on the ethylene/methacrylic acid copolymer film. The battery separator thus obtained had a graft-polymerization degree of 57 %. This battery separator was neutralized by immersing for 60 minutes in an aqueous 40 % KOH solution kept at room temperature, the concentration of which being the same as that of an alkali hydroxide electrolytic solution in an alkaline battery, followed by water-washing and then drying.

The dried alkaline battery separator thus obtained was measured in film thickness at 10 points optionally selected to obtain the results as shown in Table 1. It is understood from Table 1 that the film thickness as measured is uniform as evidenced by the measured value of about 29 ± 2μm.

This alkaline battery separator was also measured in film resistivity at 10 points optionally selected in an aqueous 40 % KOH solution to obtain the results as shown in Table 2. It is understood from Table 2 that the film resistivity variation is very small as evidenced by the measured value in each point of about 77 + 8 mΩ • $in^2$, and that the film resistivity is quite uniform throughout the whole area of the alkaline battery separator thus prepared.

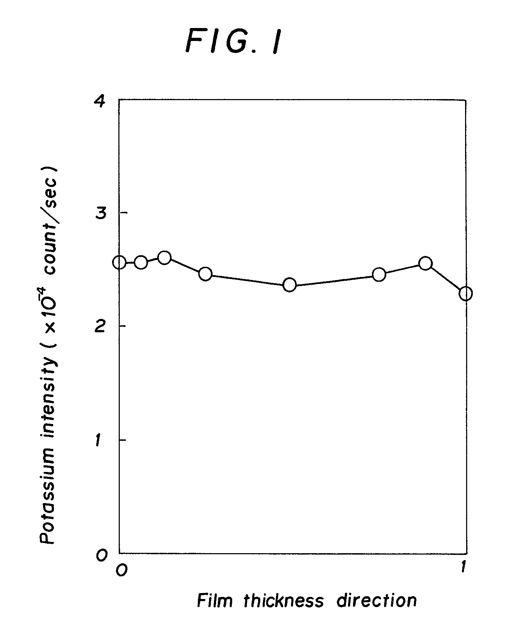

Furthermore, the carboxylic acid concentration distributed in the cross-section of the film of battery separator thus prepared was investigated by assuming this carboxylic acid as potassium salt and assaying an ion density of this potassium ions with an X-ray microanalytical instrument. In the investigation, the surface and back of the alkaline battery separator taken as 0 and 1, respectively, are plotted as abscissa, and the potassium ion density is plotted as ordinate, and the potassium ion density was measured at 8 points, i.e. the surface and back of the film and 6 points of the intermediate cross-sectional layer in the film thickness direction of the film. The results obtained are shown by means of a folding graph in Fig.1.

The graph drawn is almost horizontal, and it is understood from this fact that the carboxylic acid is present quite uniformly in the film of the battery separator.

Example 2

The same graft polymerization as in Example 1 was carried out but using an ethylene/methacrylic acid copolymer film containing 12 % by weight of methacrylic acid and having a film thickness of 30 ± 2μm as a film substrate. The alkaline battery separator thus obtained had a graft-polymerization degree of 56 %. Subsequently, this alkaline battery separator was neutralized, water-washed and dried in the same manner as in Example 1.

The dried battery separator obtained herein was measured in film thickness at 10 points of the film optionally selected to obtain the results as shown in Table 1. It is understood from Table 1 that the film thickness of the separator is uniform as evidenced by the measured value of about 29 ± 2μm. Furthermore, this separator was measured in film resistivity at 10 points of the film optionally selected in a 40 % aqueous KOH solution to obtain the results as shown in Table 2. It is understood from Table 2 that the measured value in each point of the film resistivity is about 75 ± 10 mΩ • $in^2$, thus the film resistivity is uniform, showing a very small resistivity variation.

Comparative Example 1

Using an ethylene/methacrylic acid copolymer film containing 15 % by weight of methacrylic acid and having a film thickness of 30 ± 5μm, acrylic acid was graft polymerized on this ethylene/methacrylic acid copolymer film in the same manner as in Example 1. The battery separator thus obtained had a graft-polymerization degree of 55 %. Subsequently, this battery separator was neutralized, water-washed and dried in the same manner as in Example 1.

The battery separator thus obtained was measured in film thickness at 10 points of the film optionally selected to obtain the results as shown in Table 1. The measured value of the film thickness in each point is about 32 ± 5μm, thus the thickness variation observed is large in comparison with Examples 1 and 2.

Furthermore, this separator was measured in film resistivity at 10 points of the film optionally selected in a

5

40 % aqueous KOH solution to obtain the results as shown in Table 2. The value of the film resistivity measured is markedly not uniform as evidenced by 87 ± 31 m$\Omega$ • in$^2$.

The carboxylic acid concentration distribution of the battery separator thus obtained was measured in terms of potassium ion density according to the same procedure as in Example 1.

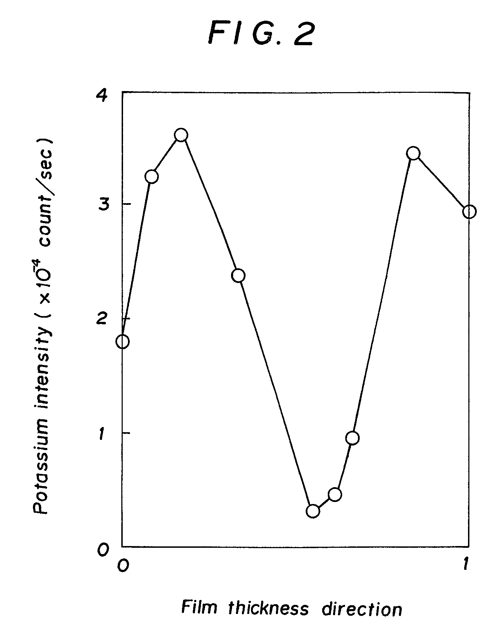

The results of measurement obtained are shown in Fig.2.

It is understood from this Fig.2 that the carboxylic acid is distributed quite inhomogeneously in the battery separator.

Table 1   Result of measurement of film thickness

| Point of measurement | A | B | C | D | E | F | G | H | I | J | Variation | |
|---|---|---|---|---|---|---|---|---|---|---|---|---|
| Example 1 | 27 | 28 | 28 | 29 | 29 | 28 | 30 | 29 | 31 | 28 | Plus  + 8.0 % | Minus − 5.9 % |
| Example 2 | 28 | 30 | 29 | 29 | 27 | 27 | 30 | 28 | 31 | 29 | Plus  + 7.6 % | Minus − 6.25% |
| Comparative Example | 36 | 28 | 29 | 33 | 32 | 37 | 29 | 33 | 35 | 27 | Plus  + 16.0% | Minus − 15.4% |

Notes) Numerals in the table represent a unit of $\mu$ m.

EP 0 306 310 A1

Table 2　　Result of measurement of film resistivity

| Point of measurement | A | B | C | D | E | F | G | H | I | J | Variation | |
|---|---|---|---|---|---|---|---|---|---|---|---|---|
| Example 1 | 69 | 76 | 82 | 80 | 78 | 81 | 77 | 78 | 70 | 76 | Plus　+ 6.9 % | Minus − 10.1% |
| Example 2 | 75 | 71 | 82 | 76 | 75 | 78 | 68 | 77 | 70 | 80 | Plus　+ 9.0 % | Minus − 9.6 % |
| Comparative Example | 83 | 60 | 56 | 93 | 67 | 74 | 104 | 96 | 115 | 118 | Plus　+ 36.3% | Minus − 35.3% |

Notes) Numerals in the table represent a unit of $m\Omega \cdot in^2$.

EP 0 306 310 A1

### Example 3

An ethylene/methacrylic acid copolymer film of 30μm in film thickness was irradiated with electron beams of 10 Mrad and then deaerated to reduce the dissolve oxygen content thereof to less than 0.05 ppm. This ethylene/methacrylic acid copolymer film was graft polymerized with acrylic acid by immersing said film for 10 minutes in an aqueous solution of 45 % by weight of acrylic acid incorporated with 0.25 % by weight of Mohr's salt and kept at a temperature of 40°C.

This graft film obtained was washed with water and then dried. Thereafter, the graft film was neutralized by immersing for 60 minutes in a 40 % aqueous KOH solution having the same concentration as that of the electrolytic solution in an alkaline battery, and then washed again with water and dried prepare a battery separator.

The battery separator thus obtained was immersed for 1 hour in a 40 % aqueous KOH solution having the same concentration as that of the electrolytic solution in the alkaline battery, whereupon a dimentional change in film of the separator caused by swelling in the repeated immersion was very little as small as 2 %.

### Example 4

A graft film obtained by graft polymerization in the same manner as in Example 3 was subjected to neutralization treatment by immersing for 15 minutes in a 40 % aqueous KOH solution kept at 70 °C, followed by water-washing and then drying.

The battery separator thus obtained was immersed in a 40 % aqueous KOH solution, whereupon a dimentional change in film of the separator caused by swelling in the repeated immersion was very little as small as 2 %.

### Comparative Example 2

A graft film obtained by graft polymerization in the same procedure as in Example 3 was subjected to neutralization treatment by immersing for 60 minutes in a 10 % aqueous KOH solution kept at room temperature, followed by water-washing and then drying.

The battery separator thus obtained was immersed in a 40 % aqueous KOH solution, whereupon a dimentional change in film of the separator caused by swelling was as large as 14 % length and 8 % in width.

### Example 5

An ethylene/methacrylic acid copolymer film having the methacrylic acid content of 8.5 % by weight and a film thickness of $30 \pm 2\mu m$ was irradiated in an atmosphere of nitrogen with electron rays of 10 Mrad with an electron rays irradiation apparatus while cooling said copolymer film. Subsequently, the thus irradiated ethylene/methacrylic acid copolymer film was graft polymerized with acrylic acid by immersing for 10 minutes in a 30 % aqueous acrylic acid solution which had been thoroughly deaerated in advance, incorporated with 0.25 % by weight of Mohr's salt and kept at 40°C, whereby a graft film was obtained. The graft film thus obtained had a graft-polymerization degree of 57 %.

Subsequently, the graft film (I) obtained by immersion in the aqueous acrylic acid solution as mentioned above was neutralized by immersing for 60 minutes in a 40 % aqueous KOH solution kept at a temperature of 70 °C, washed for 30 minutes at room temperature with a 1:4:5 aqueous mixed solution of ethylene glycol, methanol and water, and then dried to obtain a separator (I).

A separator (II) was then obtained by impregnating the separator (I) with a 30 % aqueous KOH solution saturated with zinc oxide $ZnO_2$. Subsequently, the separator (I) and 7 sheets of the separator (II), totaling to 8 sheets, were laminated with one another so that the separator (I) constitutes the uppermost layer, whereby a laminated separator was obtained.

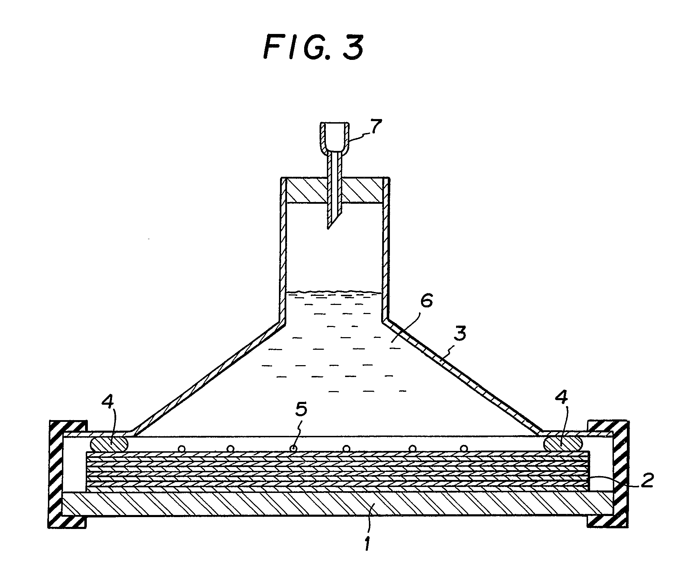

This laminated separator was placed in a silver permeation test cell as shown in Fig.3 to investigate the amount of silver ions which permeated through each separator.

In the silver permation test cell shown in Fig.3, 1 is a glass plate, 2 is a laminated separator, 3 is a cell wall, 4 is a sealing member, 5 is $Ag_2O$, 6 is a 30 % aqueous potassium hydroxide solution, and 7 is an air vent.

The silver permeation test cell thus accomodated was allowed to stand at 70 °C for 24 hours. Thereafter, the laminated separator 2 was withdrawn from the cell to examine as to whether silver permeated through each separator or not, whereupon silver permeated through only the first separator but no silver was observed in the second to 8th separator.

Furthermore, the amount of silver retained by each separator was examined by means of ICP emission spectroscopic analysis, whereupon the silver detected was 7135μg in the first sheet, 33μg in the second sheet, 7μg in the third sheet, and no silver was detected in the fourth sheet and those that follow.

### Referential Example 1

The graft film obtained in Example 1 was washed with pure water and then dried to obtain a separator (III). This separator (III) was subjected to the same silver permeation test as in Example 5, whereupon silver permeated through up to the seventh sheet of the laminated separator.

In the same procedure as in Example 5, the amount of silver retained by each separator was examined, whereupon the silver detected was 232μg in the first sheet, 75μg in the second sheet, 43μg in the third sheet, 67μg in the fourth sheet, 27μg in the fifth sheet, 20μg in the sixth sheet, 24μg in the seventh sheet and 20μg in the eighth sheet.

Example 6

An ethylene/methacrylic acid copolymer film having the methacrylic acid content of 8.5 % by weight and a film thickness of 30 ± 2μm was irradiated in an atmosphere of nitrogen with electron beams of 10 Mrad with an electron beams irradiation apparatus while cooling said copolymer film. Subsequently, this ethylene/methacrylic acid copolymer film was graft polymerized with acrylic acid by immersing said copolymer film for 10 minutes in an aqueous solution of 45 % by weight of acrylic kept at 40°C, thoroughly deserated in advance and incorporated with 0.25 % by weight of Mohr's salt. The graft film thus obtained had a graft-polymerization degree of 57 %.

This graft film was neutralized by immersing for 60 minutes at room temperature in a 40 % aqueous KOH solution, followed by water-washing and then drying.

The graft film thus neutralized was laminated with a cellophane film having a film thickness of 20 ± 1μm to obtain a battery separator.

The alkaline battery separator thus obtained was measured at 10 points of the film optionally selected to obtain the results as shown in Table 3. It is understood from Table 3 that the film thickness of the separator is quite uniform as evidence by the measured value of about 49 ± 3μm. This separator was measured in film resistivity in a 40 % aqueous KOH solution at 10 points of the film optionally selected to obtain the results as shown in Table 4. It is understood from Table 4 that the film resistivity is quite uniform as evidence by the measured value of about 87 ± 8 mΩ • in$^2$.

The battery separator obtained in the manner as mentioned above was placed in a 40 % aqueous KOH solution having the same concentration as that of the electrolytic solution in the battery, and silver oxide was arranged on the graft film side.

This aqueous KOH solution was allowed to stand at 70 °C for 4 days, whereupon the amount of silver permeated through the battery separator was very little as small as 8μg/cm$^2$.

Table 3    Result of measurement of film thickness

| Point of measurement | A | B | C | D | E | F | G | H | I | J | Average value |
|---|---|---|---|---|---|---|---|---|---|---|---|
| Thickness ($\mu$m) | 48 | 46 | 48 | 49 | 49 | 48 | 50 | 49 | 52 | 48 | 48.7  + 6.78%<br>    − 5.54% |

EP 0 306 310 A1

Table 4    Result of measurement of film resistivity

| Point of measurement | A | B | C | D | E | F | G | H | I | J | Average value |
|---|---|---|---|---|---|---|---|---|---|---|---|
| Film resistivity $(m \Omega \cdot in^2)$ | 79 | 86 | 92 | 90 | 88 | 91 | 87 | 88 | 80 | 86 | 86.7  + 6.11%<br>   − 8.88% |

EP 0 306 310 A1

### Reference Example 2

A graft film obtained and neutralized by the same procedure as in Example 6 was subjected, without being laminated with cellophane, to the same silver permeation test as in Example 6. The amount of silver permeated through the graft film was $113\mu g/cm^2$.

## Claims

1. A process for preparing a battery separator, comprising graft polymerizing (meth)acrylic acid on an ethylene/(meth)acrylic acid copolymer film, as a substrate having a thickness variation falling within the range of $\pm$ 8 % based on an average film thickness thereof.

2. The process for preparing a battery separator as claimed in claim 1, wherein the ethylene/(meth)acrylic acid copolymer film as the substrate having a thickness variation falling within the range of $\pm$ 8 % based on an average film thickness thereof contains 3 - 12 % by weight of (meth)acrylic acid.

3. A process for preparing a battery separator, comprising graft polymerizing (meth)acrylic acid on an ethylene/(meth)acrylic acid copolymer film used as a substrate, and treating the resulting graft film with an aqueous solution of alkalihydroxide having a concentration of $\alpha \pm$ 5 % by weight, wherein the $\alpha$ % by weight is taken as a concentration of the aqueous solution of alkali hydroxide used as an electrolytic solution in the battery to be installed with said graft film used as a separator therefor.

4. The process for preparing a battery separator as claimed in claim 3, wherein the ethylene/(meth)acrylic acid copolymer film as the substrate has a thickness variation falling within the range of $\pm$ 8 % based on an average film thickness thereof and the (meth)acrylic acid content of 3 - 12 % by weight.

5. A process for preparing a battery separator, comprising graft poloymerizing (meth)acrylic acid on an ethylene/(meth)acrylic acid copolymer film used as a substrate, neutralizing the resulting graft film with an aqueous solution of alkali hydroxide, and then washing the graft film with a mixed solution of water and a water-soluble organic solvent.

6. The process for preparing a battery separator as claimed in claim 5, wherein the aqueous solution of alkali hydroxide has concentration of $\alpha \pm$ 5 % by weight, wherein the $\alpha$ % by weight is taken as a concentration of the aqueous solution of alkali hydroxide used as an electrolytic solution in the battery to be installed with the graft film used as separator thereof.

7. The process for preparing a battery separator as claimed in claim 5, wherein the ethylene/(meth)acrylic acid copolymer film as the substrate has a thickness variation falling within the range of $\pm$ 8 % based on an average film thickness thereof and the (meth)acrylic acid content of 3 - 12 % by weight.

8. The process for preparing a battery separator as claimed in claim 5, wherein the water-soluble organic solvent is alcohols or ketones.

9. A process for preparing a battery separator, comprising graft polymerizing (meth)acrylic acid on an ethylene/(meth)acrylic acid copolymer film used as a substrate, and laminating the resulting graft film with cellophane.

10. The process for preparing a battery separator as claimed in claim 9, wherein the ethylene/(meth)acrylic acid copolymer film as the substrate has a thickness variation falling within the range of $\pm$ 8 % based on an average film thickness thereof and the (meth)acrylic acid content of 3 - 12 % by weight.

11. The process for preparing a battery separator, as claimed in claim 9, wherein (meth)acrylic acid is graft polymerized on the ethylene/(meth)acrylic acid copolymer film, and the resulting graft film is treated with an aqueous alkali solution, followed by laminating with cellophane.

12. The process for preparing a battery separator as claimed in claim 9, wherein (meth)acrylic acid is graft polymerized on the ethylene/(meth)acrylic acid copolymer film, and the resulting graft film is then treated with an aqueous alkali solution, followed by treating with a mixed solution of water and a water-soluble organic solvent.

## FIG. I

Potassium intensity ( ×10⁻⁴ count/sec ) vs Film thickness direction

# FIG. 2

Y-axis: Potassium intensity ( ×$10^{-4}$ count/sec )

X-axis: Film thickness direction

FIG. 3

## DOCUMENTS CONSIDERED TO BE RELEVANT

EP 88308105.1

| Category | Citation of document with indication, where appropriate, of relevant passages | Relevant to claim | CLASSIFICATION OF THE APPLICATION (Int. Cl.4) |
|---|---|---|---|
| X | EP - A1 - 0 077 227 (COMMISSARIAT A L'ENERGIE ATOMIQUE)<br><br>* Claims; page 5, lines 7-9; page 8, lines 6-9 *<br><br>-- | 1,2 | C 08 J 7/16<br>H 01 M 2/16<br>B 32 B 27/30<br>B 32 B 27/32<br>B 32 B 23/08 |
| D,X | PATENT ABSTRACTS OF JAPAN, unexamined applications, E field, vol. 4, no. 175, December 3, 1980<br><br>THE PATENT OFFICE JAPANESE GOVERNMENT<br>page 83 E 36<br><br>* Kokai-no. 55-121 267 (MATSUSHITA DENKI SANGYO K.K.) *<br><br>---- | 1 | |

**TECHNICAL FIELDS SEARCHED (Int. Cl.4)**

C 08 J

H 01 M

B 32 B

The present search report has been drawn up for all claims

| Place of search | Date of completion of the search | Examiner |
|---|---|---|
| VIENNA | 09-12-1988 | WEIGERSTORFER |